# FASCICULE DE BREVET EUROPEEN

(11) **EP 0 724 342 B1**
(45) Date de publication et mention de la délivrance du brevet: **04.04.2001**
(21) Numéro de dépôt: 96400149.9
(22) Date de dépôt: 22.01.1996
(51) Int. Cl.: H04L 7/04

(54) **Paquet de transmission prévu pour la transmission discontinue**
Datenübertragungspaket für die Verwendung mit diskontinuierlicher Übertragung
Transmission packet to be used for discontinuous transmission

(30) Priorité: 24.01.1995 FR 9500775
(43) Date de publication de la demande: 31.07.1996
(73) Titulaire: ALCATEL, 75008 Paris (FR)
(72) Inventeur: Dupuy, Pierre, F-75017 Paris (FR); Cruchani, Laurent, F-92500 Rueil Malmaison (FR)
(74) Mandataire: Sciaux, Edmond

(56) Documents cités:
- EP-A- 0 044 780
- WO-A-87/01490
- US-A- 4 697 277

## Description

La présente invention concerne un paquet de transmission spécialement destiné à la transmission discontinue. Elle s'applique notamment dans les systèmes de radiocommunications et, pour en faciliter la présentation, on se réfèrera au système GSM dont lea notoriété est maintenant bien établie.

Dans le GSM il est prévu de faire de la transmission discontinue pour acheminer un signal de parole, par exemple. En effet, un signal de parole est normalement acheminé au moyen de paquets successifs chacun émis dans le même intervalle de temps de trames successives. Cependant, lorsqu'il n'y a pas de parole à acheminer, on s'est aperçu qu'il n'était pas nécessaire de transmettre tous ces paquets, mais qu'il suffisait de transmettre un descripteur de bruit au moyen de quelques paquets, de temps en temps, pour restituer le bruit présent en l'absence de parole.

Ainsi, le récepteur qui écoute en permanence l'intervalle de temps qui lui est assigné, reçoit soit de la parole en continu, soit un descripteur de bruit et puis plus rien jusqu'au descripteur suivant. Pour plus de détails on se reportera avantageusement à la recommandation GSM 05.08 version 3.6.1.

Tout se passe correctement tant que l'émetteur n'émet rien entre deux descripteurs de bruit. Mais le GSM impose par ailleurs qu'une station de base émette en permanence sur la fréquence qui supporte le principal canal de diffusion, à savoir le canal dit BCCH. Ainsi, lorsqu'il n'y a pas d'information à transmettre, la station de base émet des paquets de bourrage ("dummy burst" en anglais) qui sont sans signification propre.

Si le signal de parole est véhiculé en totalité par la fréquence BCCH ou bien en partie seulement lorsque l'on a recours au saut de fréquence en utilisant cette fréquence BCCH, le récepteur va recevoir des paquets de bourrage.

Les paquets de parole et les paquets de bourrage ont la même structure, à savoir un champ de synchronisation disposé sensiblement au centre du paquet et un champ de données disposé de part et d'autre du champ de synchronisation. Dans un cas comme dans l'autre, c'est une séquence d'apprentissage connue du récepteur qui est placée dans le champ de synchronisation.

Le récepteur comprend notamment des moyens de corrélation pour corréler la séquence reçue dans le champ de synchronisation avec une réplique de la séquence d'apprentissage générée localement. Le résultat de cette corrélation est généralement utilisé pour mesurer la qualité du paquet reçu et, dans le cas d'un paquet de bourrage, cette qualité a de fortes chances d'être déclarée bonne. Si, par ailleurs, le contenu du champ de données d'un paquet de bourrage peut être assimilé à des données de parole compte tenu des différents contrôles qui sont effectués sur ce champ, le récepteur va alors interpréter ce paquet de bourrage comme un paquet de parole. Cette situation, bien que rare, va tout de même se produire, ce qui aura pour effet de générer au niveau du récepteur un bruit désagréable connu de l'homme de métier sous le nom de "bruit de bouteille (pling-plong)". La production d'un tel bruit n'est pas souhaitable.

Il faut maintenant préciser que la séquence d'apprentissage est une séquence identifiée parmi plusieurs séquences de synchronisation. Dans le cas du GSM, on a prévu huit séquences distinctes qui sont identifiées par un code TSC pour "Training Sequence Code" en anglais. Les séquences correspondant aux différents TSC possèdent de bonnes propriétés d'autocorrélation et d'intercorrélation.

Une disposition analogue est d'ailleurs prévue dans le document W087/01490. Cependant, dans ce document, il n'est pas envisagé de faire de la transmission discontinue si bien qu'il n'y a pas de paquet de bourrage. Le problème de la production d'un bruit indésirable ne se pose donc pas.

L'homme du métier qui se préoccupe de la distinction entre un paquet de parole et un paquet de bourrage va donc penser à placer dans le champ de synchronisation une séquence d'identification différente des huit séquences de synchronisationn que l'on peut rencontrer dans un réseau GSM, cette séquence d'identification ayant de bonnes propriétés d'intercorrélation avec chacune des huit séquences de synchronisation. Cette solution est satisfaisante, mais elle nécessite d'introduire une nouvelle séquence dans le système GSM, ce qui est déjà une contrainte en soi, mais elle peut nécessiter de plus une modification substantielle des équipements déjà en service.

L'invention a ainsi pour but la définition et le traitement d'un paquet de bourrage qui ne requiert aucune donnée d'identification qui ne soit déjà connue du système.

Ce but est atteint en prévoyant un paquet de bourrage utilisé en association avec des paquets de parole dans la transmission discontinue de la parole, chacun de ces paquets comprenant un champ de synchronisation, le champ de synchronisation des paquets de parole supportant une séquence d'apprentissage identifiée dans un jeu de séquences de synchronisation, et le champ de synchronisation du paquet de bourrage supportant une séquence d'identification qui est une séquence de synchronisation distincte de la séquence d'apprentissage.

Ainsi, il n'est pas nécessaire de prévoir une séquence d'identification spécifique pour les paquets de bourrage. On utilise une séquence qui est déjà mémorisée dans la station de base.

Le résultat souhaité est bien atteint car, généralement, les différentes séquences de synchronisation sont choisies de sorte qu'elles possèdent de bonnes propriétés d'intercorrélation. Ainsi, si la séquence d'identification sélectionnée parmi les séquences de synchronisation n'est pas réellement optimale, elle permet de diminuer très sensiblement le nombre de paquets de bourrage détectés comme paquets de parole et cet événement, qui est déjà rare sans la mise en oeuvre de l'invention, ne se produira qu'avec une probabilité infime si l'on utilise le paquet de transmission proposé ci-dessus.

Tous les éléments nécessaires à la réalisation de l'invention sont déjà prévus dans le système et il suffira de réaliser une modification mineure des équipements pour l'appliquer.

Avantageusement, le paquet de bourrage est défini de sorte que la séquence d'identification soit prédéterminée.

Ainsi, soit le système lui-même, soit la connaissance de la séquence d'apprentissage détermine de manière univoque la connaissance de la séquence d'identification.

Selon l'invention, on peut tirer avantage de cette disposition en réalisant un récepteur, pour la réception d'un paquet de bourrage, comprenant des moyens pour calculer la corrélation d'une séquence reçue dans un champ de synchronisation avec une séquence de référence, et comprenant un circuit de commande pour produire en premier lieu la séquence d'apprentissage comme séquence de référence et, lorsque le résultat de cette corrélation n'est pas satisfaisant, produire la séquence d'identification comme séquence de référence.

En effet, le terminal connaissant implicitement ou explicitement la séquence d'identification, il peut rechercher la corrélation de cette séquence avec celle qu'il reçoit dans le champ de synchronisation. Si le résultat de cette corrélation est meilleur que celui de la corrélation effectuée avec la séquence d'apprentissage, il s'agira pratiquement à coup sûr d'un paquet de bourrage. On augmente ainsi la qualité de la décision dans le récepteur quand au fait de savoir si l'on est en présence d'un paquet de parole ou d'un paquet de bourrage.

L'invention concerne également un émetteur comprenant un circuit de mise en forme de paquet pour introduire une séquence de synchronisation dans un champ de synchronisation d'un paquet utilisé pour la transmission discontinue de la parole, et comprenant de plus un circuit de sélection pour produire cette séquence de synchronisation respectivement comme une séquence d'apprentissage ou une séquence d'identification selon que ce paquet est respectivement un paquet de parole ou un paquet de bourrage.

L'invention apparaîtra maintenant de manière plus claire et plus précise dans le cadre de la description d'un exemple de réalisation prévu pour le système GSM, ceci à titre illustratif, et en se référant aux figures annexées qui représentent :
- la figure 1, une représentation simplifiée d'un paquet de transmission,
- la figure 2, les moyens nécessaires à la mise en oeuvre de l'invention dans un émetteur, et
- la figure 3, les moyens nécessaires à la mise en oeuvre de l'invention dans un récepteur.

Les éléments présents dans différentes figures sont affectés d'une seule et même référence.

En matière de rappel, il est prévu dans le GSM huit séquences de synchronisation distinctes identifiées par un code de séquence TSC (pour "Training Sequence Code"). Avant l'établissement d'un appel quelconque entre un terminal et une station de base, cette dernière précise au terminal laquelle de ces séquences de synchronisation sera utilisée comme séquence d'apprentissage pendant la durée de l'appel.

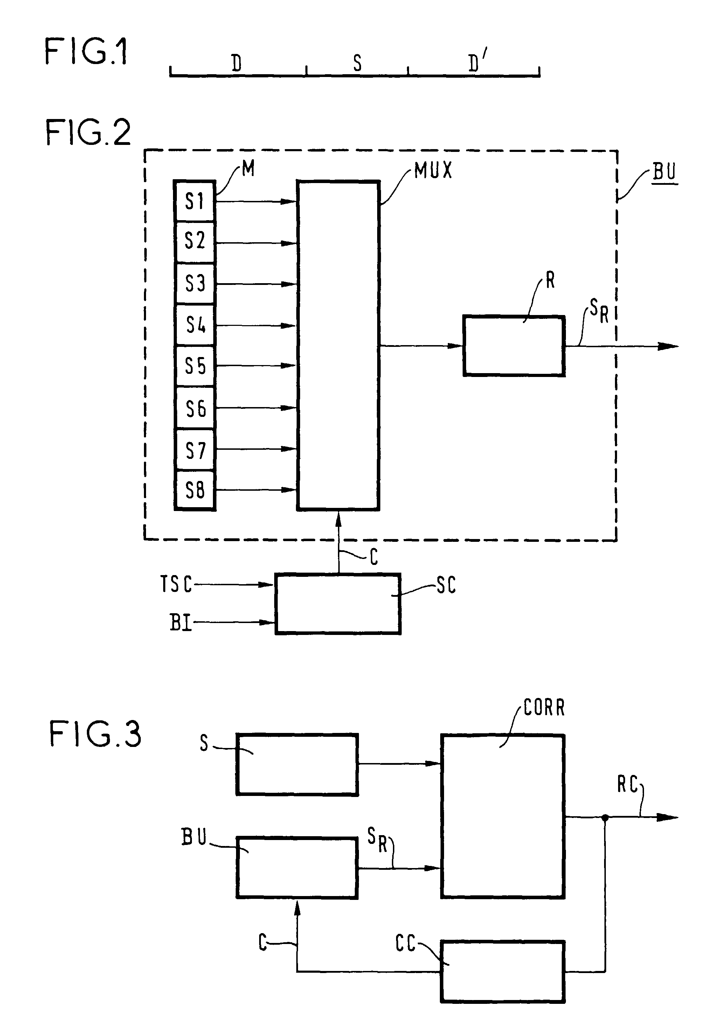

On rappelle également, en référence à la figure 1, la structure simplifiée d'un paquet de transmission transmis au cours d'un intervalle de temps d'une trame. Ce paquet comprend un champ de synchronisation S disposé ici sensiblement au centre du paquet. Ce champ est précédé d'un premier sous-champ de données D et il est suivi d'un second sous-champ de données D'. On conviendra de dénommer champ de données la réunion de ce premier D et de ce second D' sous-champs de données puisqu'ils correspondent à une même entité. En effet, dans des systèmes différents du GSM, on a prévu ou on pourrait prévoir de placer le champ de synchronisation S à tout autre endroit du paquet.

En référence à la figure 2, la station de base qui agit comme émetteur comporte de manière connue un circuit de mise en forme de paquets BU. Ce circuit BU comprend une mémoire M dans laquelle sont enregistrées les différentes séquences de synchronisation S1 à S8. Il comprend également un multiplexeur MUX qui, en réponse à un signal de commande C, communique l'une des séquences de synchronisation à un registre R. Ce registre comprend la séquence qui sera ensuite placée dans le champs de synchronisation S du paquet.

Avant l'invention, ce signal de commande C correspondait au code de séquence TSC.

Selon l'invention, on prévoit un circuit de sélection SC qui produit maintenant le signal de commande C en fonction du code de séquence TSC et d'un identificateur de paquet BI. Cet identificateur BI précise si le paquet qu'il s'agit de transmettre est un paquet de parole ou un paquet de bourrage. Lorsque le paquet est un paquet de parole, le signal de commande C correspond au code de séquence TSC, comme auparavant, et c'est la séquence d'apprentissage qui est placée dans le registre R. Lorsqu'au contraire le paquet est un paquet de bourrage, le signal de commande ne correspond pas à ce code de séquence TSC et c'est une séquence d'identification qui est placée dans le registre R. On a dans ce cas plusieurs possibilités.

Une première solution consiste à décider qu'une séquence de synchronisation particulière ne sera jamais utilisée comme séquence d'apprentissage. Cette séquence particulière sera donc utilisée comme séquence d'identification et sera placée systématiquement dans le champ de synchronisation S de tous les paquets de bourrage au moyen du circuit de sélection SC. Avantageusement, cette séquence d'identification sera celle des séquences de synchronisation qui présente les meilleures propriétés d'intercorrélation avec toutes les autres séquences de synchronisation.

Une deuxième solution consiste à établir une relation entre la séquence d'apprentissage utilisée pour un paquet de parole et la séquence d'identification placée dans un paquet de bourrage. A titre d'exemple, la séquence d'identification sera celle Si+1 qui suit immédiatement la séquence d'apprentissage Si. Le circuit de sélection est également particulièrement simple dans ce cas. En effet, si l'on attribue à l'identificateur de paquet BI la valeur O s'il s'agit d'un paquet de parole et la valeur 1 s'il s'agit d'un paquet de bourrage, le signal de commande correspondra à la somme des valeurs de TSC et de BI modulo 8.

Une troisième solution consiste à choisir arbitrairement une séquence d'identification distincte de la séquence d'apprentissage. Ce n'est pas nécessairement la solution la plus simple à mettre en oeuvre.

On voit bien qu'une multitude de solutions sont à la portée de l'homme du métier.

On remarque par ailleurs que selon la première ou la seconde solution, la séquence d'identification est prédéterminée. En effet, selon la première solution il s'agit toujours de la même séquence et selon la deuxième solution, c'est la connaissance de la séquence d'apprentissage qui détermine celle de la séquence d'identification.

On mettra avantageusement à profit cette détermination de la séquence d'identification pour améliorer les performances du récepteur.

De manière connue, en référence à la figure 3, le récepteur comprend un circuit de corrélation CORR pour produire le résultat de la corrélation RC entre la séquence du champ de synchronisation S figurant dans le paquet reçu et une séquence de référence S_{R}. Cette séquence de référence S_{R} peut être produite par un circuit de mise en forme de paquets BU identique à celui présent dans l'émetteur.

Avant l'invention, le signal de commande C de ce circuit BU correspondait au code de séquence TSC que le récepteur avait acquis auparavant.

Selon l'invention, on prévoit un circuit de commande CC qui reçoit le résultat de corrélation RC et produit le signal de commande C en conséquence.

Lorsque le circuit de commande CC est informé qu'une séquence est disponible dans le champ de synchronisation, il produit dans une première étape le signal de commande C de sorte que la séquence de référence S_{R} corresponde à la séquence d'apprentissage. Il reçoit du circuit de corrélation CORR le résultat de corrélation RC correspondant RC = A. Si ce résultat A est satisfaisant, c'est-à-dire s'il excède un premier seuil T1, c'est que le paquet reçu est un paquet de parole. Si par contre ce résultat n'est pas satisfaisant, le circuit de commande CC produit dans une seconde étape le signal de commande C de sorte que la séquence de référence S_{R} corresponde à la séquence d'identification. Si le résultat de corrélation RC correspondant RC = I est satisfaisant, alors il est pratiquement sur que l'on est en présence d'un paquet de bourrage.

En résumé, pour adopter une méthode dépourvue d'aléas, on peut agir comme suit:
- si A est supérieur à T1, il s'agit d'un paquet de parole;
- si A est inférieur à T1 et si I est supérieur à T1, il s'agit d'un paquet de bourrage;
- si A et I sont inférieurs à T1, il s'agit d'un paquet de parole.

On peut également fixer un deuxième seuil T2 inférieur à T1 de sorte que :
- si A est supérieur à T1, il s'agit d'un paquet de parole ;
- si A est inférieur à T2, il s'agit d'un paquet de bourrage ;
- si A est compris entre T1 et T2 et si I est supérieur à T1, il s'agit d'un paquet de bourrage ;
- si A est compris entre T1 et T2 et si I est inférieur à T1, il s'agit d'un paquet de parole.

On voit qu'il y a plusieurs moyens d'augmenter de manière significative la sécurité sur la décision qui est prévue quant à la nature du paquet reçu dans le récepteur.

## Revendications

1. Paquet de bourrage utilisé en association avec des paquets de parole dans la transmission discontinue de la parole, chacun desdits paquets comprenant un champ de synchronisation (S) ; le champ de synchronisation desdits paquets de parole supportant une séquence d'apprentissage (S1) identifiée dans un jeu de séquences de synchronisation (S1,...,S8) ;
caractérisé en ce que, le champ de synchronisation (S) dudit paquet de bourrage supporte une séquence d'identification (S2) qui est une séquence de synchronisation distincte de ladite séquence d'apprentissage (S1) et qui est identifiée dans ledit jeu de séquences de synchronisation.

2. Paquet de bourrage selon la revendication 1, caractérisé en ce que ladite séquence d'identification (S2) est prédéterminée.

3. Récepteur pour la réception d'un paquet de bourrage utilisé en association avec des paquets de parole dans la transmission discontinue de la parole, chacun desdits paquets comprenant un champ de synchronisation (S) ; le champ de synchronisation desdits paquets de parole supportant une séquence d'apprentissage (S1) identifiée dans un jeu de séquences de synchronisation (S1,...,S8) ; ledit récepteur comprenant des moyens (CORR) pour calculer la corrélation d'une séquence reçue dans un champ de synchronisation (S) avec une séquence de référence (SR) ;
caractérisé en ce qu'il comprend un circuit de commande (CC) pour produire en premier lieu ladite séquence d'apprentissage (S1) comme séquence de référence (S_{R}) et, lorsque le résultat de ladite corrélation (RC) n'est pas satisfaisant, produire une séquence d'identification (S2), qui est identifiée dans ledit jeu de séquences de synchronisation et distincte de ladite séquence d'apprentissage, comme séquence de référence (S_{R}).

4. Emetteur comprenant un circuit de mise en forme de paquet (BU) pour introduire une séquence de synchronisation (S1,...,S8), identifiée dans un jeu de séquences de synchronisation (S1,...,S8), dans un champ de synchronisation (S) d'un paquet utilisé pour la transmission discontinue de la parole, et d'un paquet de bourrage utilisé en association avec ledit paquet de parole ;
caractérisé en ce qu'il comprend de plus un circuit de sélection (SC) pour produire cette séquence de synchronisation respectivement comme une séquence d'apprentissage (S1) ou une séquence d'identification (S2) distincte de ladite séquence d'apprentissage, selon que ledit paquet est respectivement un paquet de parole ou un paquet de bourrage (BI).

## Claims

1. A dummy burst used in association with speech bursts in discontinuous transmission of speech, each of said bursts including a synchronization field (S) and the synchronization field of said speech bursts supporting an identified training sequence (S1) in a set of synchronization sequences (S1, ..., S8), which dummy burst is characterized in that its synchronization field (S) supports an identification sequence (S2) which is an identified synchronization sequence from said set of synchronization sequences which is different from said training sequence (S1).

2. A dummy burst according to claim 1, characterized in that said identification sequence (S2) is predetermined.

3. A receiver for receiving a dummy burst used in association with speech bursts in the discontinuous transmission of speech, each of said bursts including a synchronization field (S) and the synchronization field of said speech bursts supporting an identified training sequence (S1) from a set of synchronization sequences (S1, ..., S8), said receiver including means (CORR) for calculating the correlation of a sequence received in a synchronization field (S) with a reference sequence (S_{R}), which receiver is characterized in that it includes a control circuit (CC) for producing firstly said training sequence (S1) as a reference sequence (S_{R}) and then producing an identified identification sequence (S2) from said set of synchronization sequences which is different from said training sequence as the reference sequence (S_{R}) if the result (RC) of said correlation is not satisfactory.

4. A transmitter including a burst builder unit (BU) for introducing an identified synchronization sequence (S1, ..., S8) from a set of synchronization sequences (S1, ..., S8) into a synchronization field (S) of a burst used for the discontinuous transmission of speech, and of a dummy burst used in association with said speech burst, characterized in that it further includes a selector circuit (SC) for producing that synchronization sequence as a training sequence (S1) or as an identification sequence (S2) different from said training sequence, according to whether said burst is respectively a speech burst or a dummy burst (Bl).

## Patentansprüche

1. Füllpaket, verwendet in Verbindung mit Sprachpaketen bei der diskontinuierlichen Übertragung von Sprache, wobei jedes der Pakete ein Synchronisationsfeld (S) umfasst, wobei das Synchronisationsfeld der Sprachpakete eine in einem Satz von Synchronisationssequenzen (S1, ..., S8) identifizierte Trainingssequenz (S1) trägt; dadurch gekennzeichnet, dass das Synchronisationsfeld (S) des Füllpaketes eine Identifizierungssequenz (S2) trägt, die eine von der Trainingssequenz (S1) verschiedene Synchronisationssequenz ist und die in dem Satz von Synchronisationssequenzen identifiziert wird.

2. Füllpaket nach Anspruch 1, dadurch gekennzeichnet, dass die Identifizierungssequenz (S2) vorgegeben ist.

3. Empfänger für den Empfang eines Füllpaketes, das in Verbindung mit Sprachpaketen bei der diskontinuierlichen Übertragung von Sprache verwendet wird, wobei jedes dieser Pakete ein Synchronisationsfeld (S) umfasst; wobei das Synchronisationsfeld der Sprachpakete eine in einem Satz von Synchronisationssequenzen (S1, ..., S8) identifizierte Trainingssequenz (S1) trägt; wobei der Empfänger Mittel (CORR) zum Berechnen der Korrelation einer in einem Synchronisationsfeld (S) empfangenen Sequenz mit einer Referenzsequenz (SR) umfasst; dadurch gekennzeichnet, dass er eine Steuerschaltung (CC) umfasst, um zuerst die Trainingssequenz (S₁) als Referenzsequenz (S_{R}) zu erzeugen, und wenn das Ergebnis der Korrelation (RC) nicht befriedigend ist, eine Identifizierungssequenz (S2), die in dem Satz von Synchronisationssequenzen identifiziert wird und von der Trainingssequenz verschieden ist, als Referenzsequenz (S_{R}) zu erzeugen.

4. Sender mit einer Paketbildungsschaltung (BU) zum Einfügen einer Synchronisationssequenz (S1, ..., S8), die in einem Satz von Synchronisationssequenzen (S1, ..., S8) identifiziert ist, in ein Synchronisationsfeld (S) eines Paketes, das für die diskontinuierliche Übertragung von Sprache verwendet wird, und ein in Verbindung mit dem Sprachpaket verwendetes Füllpaket; dadurch gekennzeichnet, dass er außerdem eine Auswahlschaltung (SC) zum Erzeugen dieser Synchronisationssequenz jeweils als eine Trainingssequenz (S1) oder als eine von der Trainingssequenz verschiedene Identifizierungssequenz (S2) umfasst, je nach dem, ob das Paket ein Sprachpaket bzw. ein Füllpaket (BI) ist.
